# EUROPEAN PATENT APPLICATION

(11) **EP 4 760 549 A1**
(43) Date of publication of application: **17.06.2026**
(21) Application number: 24220356.0
(22) Date of filing: 16.12.2024
(51) Int. Cl.: G06F 18/20, G06V 10/776, G06V 20/70

(54) **METHOD FOR IDENTIFYING SCENE GRAPH PATTERNS ASSOCIATED WITH IMAGE CLASSIFIER PREDICTIONS**

(71) Applicant: Robert Bosch GmbH, 70442 Stuttgart (DE)
(72) Inventor: Ismaeil, Youmna Salah Mahmoud, 70176 Stuttgart (DE); Stepanova, Daria, 71229 Leonberg (DE); Tran, Trung Kien, 70569 Stuttgart (DE); Metzen, Jan Hendrik, 71034 Boeblingen (DE)

(57) **Abstract**

A computer-implemented method 1000 of identifying patterns 23 correlated with correct and incorrect image classifications 52 using scene graphs 12. For a set of images 11, the method obtains scene graphs 12 from the images, classifies the images using a pre-trained classifier 5, groups the scene graphs (12') by classification correctness, and extracts representative subgraphs within each group, revealing patterns associated with the classifications 52.

## Description

### Technical field

The invention relates to a computer implemented method for identifying patterns in scene graphs of images that correlate with correct or incorrect image classifications of a pre-trained image classifier, a corresponding system, a computer program, and a machine-readable storage medium.

### Prior art

Data-driven image classifiers, such as neural networks, learn features from labeled training data to categorize images. Analyzing misclassifications is crucial for understanding and improving classifier performance. Prior work has explored various techniques, including linking image objects to visual contexts (https://arxiv.org/abs/2001.03152), and manipulating image attributes to assess robustness, https://arxiv.org/abs/2006.16241.

Scene graph generation from visual content has proven effective in semantic image retrieval and captioning. Existing approaches utilize scene graphs derived from human-annotated image captions, https://arxiv.org/abs/1602.07332, or leverage foundation models, https://arxiv.org/abs/2310.01356 . Some applications may require user input for object identification or bounding box annotations, e.g. https://arxiv.org/abs/2107.14178, https://arxiv.org/abs/2103.15365.

### Disclosure of the invention

According to a first aspect, the invention relates to a computer-implemented method of identifying patterns in scene graphs of images that correlate with correct or incorrect image classifications of a pre-trained image classifier. In other words, the invention relates to a computer-implemented method of identifying patterns in scene graphs of images that correspond to, are associated with, and/or indicate correct or incorrect image classifications of a pre-trained image classifier. The method comprises the following steps. In a first method step, a scene graph is obtained for each of a plurality of images. The images may be acquired with an image sensor of a camera or video camera, respectively, and may comprise a plurality of pixels arranged in at least two dimensions, each pixel having at least one associated pixelattribute. A pixelattribute is selected from the group comprising at least color, depth, and intensity. Each image may be provided together with a corresponding expected classification, i.e. a class label, respectively. Generally, a class label may be understood as a label/identifier assigned to an image, indicating the predicted or true (i.e. expected) class to which the image belongs. The expected class label may have been determined, e.g., by (human or machine) annotation.. The scene graphs may be obtained as an output from a machine learning system for scene graph generation, respectively, wherein said machine learning system may be referred to herein as a scene graph generator. Accordingly, the scene graph generator receives an image as input and generates a corresponding scene graph as output. Optionally, the scene graph generator also receives textual instructions, such as a natural language request, specifying details of the desired scene graph generation. These instructions may specify the desired accuracy and level of detail of the scene graph, including how finely the depicted scene should be represented. They may also request the inclusion of image-specific information into the scene graph, such as image quality or modality. Subsequently, the plurality of images is classified using the pre-trained image classifier, i.e., for each image a class label is predicted by the pre-trained image classifier. The class label may, in particular, refer to semantic content of part of/the entire image. The predicted classification/class label for each image is compared to a corresponding expected classification/class label for the image, respectively, and determined to be either correct or incorrect (with respect to the expected ground truth classification).

An expected, i.e. ground truth, classification/class label is, in this context, an expected, pre-determined, and/or factually correct category/label assigned to an image. In a subsequent step, the scene graphs are grouped into a first group and a second group based on whether the classification by the image classifier - i.e. the predicted class label of the image - is correct or incorrect, respectively. Subsequently, for each of the first group and the second group, a set of representative/common subgraphs shared among the scene graphs within the respective group is extracted, wherein the representative subgraphs represent the patterns correlated with the correct and incorrect classifications, respectively. Accordingly, each pattern is a set of triplets forming a subgraph. The extraction of subgraphs may be performed with graph mining techniques.

A scene graph, in context of this disclosure, is a structured data representation of semantic relationships within an image and/or the scene depicted in the image - optionally including relationships related to image quality and/or mode - comprising nodes representing objects and/or attributes, and edges representing the semantic relationships between respective nodes. The nodes represent parts of the image, and the edges represent the relation between the respective parts of the image. As non-limiting examples, a node could represent a vehicle, a pedestrian, or focus of the image, and edges could represent the relation between parts of the image (e.g. (pedestrian, is on, road)) or descriptions of parts of the image (e.g. (image, is, blurry)).

A representative subgraph may be understood as a characteristic/typical subgraph shared among the scene graphs within the respective group.

In extracting a set of representative subgraphs shared among the scene graphs within the respective group, embeddings of (at least) the nodes of the scene graphs may be used. To this end, in an additional step prior to extracting representative subgraphs, embeddings of the nodes of the scene graphs may be generated, wherein the embeddings comprise/encode semantic information of the nodes. For each scene graph, an embedding of each node in the respective scene graph may be generated. The embeddings may be generated by providing a textual representation of each node to an embedding model, which then outputs a corresponding embedding. A textual representation may, for instance, be the name, label, and/or description of the respective node. Exemplarily, the embedding model may be given by MiniLM, https://arxiv.org/abs/2002.10957.

Advantageously, the proposed method is dynamic and unsupervised, identifying patterns without relying on predefined labels or manual annotation, enabling the discovery of previously unknown biases. It is adaptable and granular, leveraging commonsense knowledge and foundation models to customize semantic dimensions for each image, resulting in a more detailed analysis compared to static attribute-based methods. By extracting representative subgraphs correlated with both correct and incorrect classifications, the method provides insights into the classifier's decision-making process and the reasons for potential failures. Furthermore, it is predictive, enabling proactive bias detection in datasets by identifying weaknesses in the training data, such as specific patterns leading to frequent incorrect classifications (e.g., particular surroundings or lighting conditions depicted in images). Finally, the generated scene graphs are denser and more informative than manually annotated graphs, capturing richer and more nuanced relationships between objects and their attributes.

Preferably, a subgraph is included in the set of representative subgraphs if its frequency of occurrence within the corresponding group exceeds a predefined threshold. Separate thresholds are defined for each group, based on the total number of images (and thus, scene graphs) in that group. The threshold for each group is a fraction of the total number of images in that group. In one embodiment, the fraction is 0.5, requiring a subgraph to exist in at least half of the scene graphs within that group. Other embodiments may use different values. Lower values for the fraction result in a more granular analysis (capturing more subgraphs) but increase the risk of including less frequent or spurious patterns. Conversely, higher values for the fraction prioritize the most common patterns, increasing confidence but potentially sacrificing granularity. The optimal value depends on factors such as the application domain, dataset size, and the characteristics of the images and their scene graphs. Generally, the threshold is chosen to balance completeness (capturing relevant patterns) against the risk of including spurious patterns and the computational cost of analysis.

Advantageously, by using a frequency threshold for subgraph inclusion, selected representative subgraphs may be truly characteristic of and consistently associated with the corresponding group (either correctly or incorrectly classified images). Accordingly, the impact of noise and spurious correlations may be reduced, leading to a more reliable identification of underlying factors influencing the classifier's behavior.

Preferably, the method comprises the following additional steps, prior to extracting the representative subgraphs: (in case, they have not yet been determined in preceding method steps) embeddings for the nodes of the scene graphs are generated, wherein the embeddings comprise semantic information of the nodes. The embeddings are vector representations of the nodes, capturing respective semantic information; in a method step after grouping the scene graphs into the two groups, similar nodes are identified across the plurality of scene graphs based on a similarity measure applied to the embeddings. For instance, cosine similarity is used as the similarity measure, and two nodes are considered similar if the cosine similarity of their respective embeddings is at least 0.8. Generally, the optimal similarity threshold is determined empirically by evaluating the impact of different thresholds on a validation dataset and observing how changes affect the quality and relevance of the extracted patterns. For example, a starting point of 0.7 could be incrementally increased as needed. Subsequently, similar nodes are treated as equivalent during representative subgraph extraction. This allows nodes with different labels to be considered interchangeable if their semantic similarity, based on their embeddings, exceeds the defined threshold. There are at least two options for handling similar nodes during representative subgraph extraction: first, averaging the embeddings of similar nodes to create a representative embedding for the respective cluster and relabeling all nodes in the cluster with a new common label based on this averaged embedding; or, second, providing an additional similarity list for the subsequent subgraph extraction step. For instance, the latter option may be implemented when using cgspan, a graph-based substructure pattern mining algorithm within the step of extraction of representative subgraphs, cgspan handles similar nodes based on provided similarity lists, avoiding the need for explicit relabeling of nodes.

Advantageously, semantically similar nodes may be considered to be identical, even if they have different labels. This improves the quality and relevance of the extracted representative subgraphs by grouping conceptually similar nodes, regardless of superficial labeling differences. Consequently, the method can identify more general and meaningful patterns related to correct and incorrect classifications, which might be missed if strictly relying on identical label matches. Furthermore, by using a similarity list (as described in context with cgspan above), the method avoids the potentially complex and computationally expensive step of explicitly relabeling similar nodes.

Preferably, representative subgraphs within each group are extracted using cgspan. More generally, any frequent pattern mining algorithm that operates on graphs and can accommodate similar nodes (e.g., via node-to-label mappings) may be used to extract shared subgraphs. A node-to-label mapping associates each node in a graph with a label, enabling the algorithm to treat nodes with the same label as equivalent during subgraph extraction. Another exemplary frequent pattern mining algorithm that could be used for extracting representative subgraphs is described in https.//doi.org/10.1007/3-540-45372-5_2.

Preferably, the method step for obtaining a scene graph for each image comprises:
- in a first step, generating an initial textual description of the respective image from the image and an initial natural language question using a machine learning system; in this context, the natural language question requests the description of the semantic content of (parts) of the input image;
- in a subsequent step, extracting an initial set of triplets from the initial textual description using an information extraction module, each triplet comprising a source node, a relation, and a target node;
- then, for N iterations, where N > 1: selecting at least one source or target node from a current set of triplets, wherein for the first iteration the initial set of triplets forms the current set;
- determining an attribute related to the selected node(s) from a graph-structured database (commonsense KG);
- determining a question based on the selected node(s) and the determined attribute;
- generating a further textual description of the image from the image and the determined question using the machine learning system, i.e. the textual description is responsive to the determined question;
- extracting a further set of triplets from the further textual description using the information extraction module; and
- combining the current set of triplets and the further set of triplets into an updated set, which becomes the current set for the next iteration;
- and finally, after N iterations, constructing the scene graph from the combined sets of triplets.

Advantageously, these method steps, particularly the iterative approach, allow to progressively build a more comprehensive and accurate scene graph allowing a deeper understanding of the input image's content by leveraging targeted questions guided by both extracted information (extracted from the image itself) and external knowledge. This results in a more detailed and robust scene graph compared to methods relying solely on a single initial image description. This, in particular, enables deeper insights into the image content. Furthermore, the method allows creating scene graphs in an unsupervised and dynamic approach using, e.g., open-source foundation models and open-source data bases, enabling deeper insights into image content.

Preferably, the scene graph comprises nodes representing the sources and targets of the combined sets of triplets and comprises edges between nodes representing the relations connecting the sources and targets.

Preferably, the initial natural language question comprises an request for describing additional contextual information of the image. Thereby, additional contextual information may comprise at least one of image quality, image mode, weather, and/or lighting in the initial textual description. Image quality may refer to at least one of sharpness, resolution, color(s), and presence/absence of artifacts. Artifacts may be any visual anomalies that degrade the image quality and do not represent the true scene. Digital image artifacts may comprise compression artifacts (e.g., blockiness, blurring), noise (e.g., graininess), aliasing (e.g., jagged edges), color banding, sensor dust (e.g., dark spots), motion blur, and distortions from lens imperfections or sensor limitations. Common image modes include RGB (Red, Green, Blue), CMYK (Cyan, Magenta, Yellow, Black), grayscale, and indexed color. The image mode defines the way color data of an image is represented and stored.

Preferably, the number N of iterations is reached when for each source node and for each target node in the updated set of triplets at least one attribute is determined in the data base. Alternatively, the number N of iterations may be reached, when for each source node and each target node in the updated set of triplets a pre-defined number of attributes is determined in the data base. E.g., a pre-defined number of attributes may be two attributes per node. Alternatively, the number N of iterations may be reached when for a predefined number of source nodes and a predefined number of target nodes at least one attribute is determined from the data base. The latter case allows to determine attributes only for selected nodes. According to yet another alternative, the number of iterations N may be fixed/pre-defined and may in particular be chosen independently of the number of source nodes and target nodes in the (updated) set of triplets. Choosing the one or other of the aforementioned options may control the degree of accuracy and/or the level of detail of the finally determined scene graph. Advantageously, in all aforementioned cases, the number N allows to determine the level of detail and/or accuracy required/desired for the image description with the scene graph.

Preferably, in each iteration, the question is determined from a predefined template. The template comprises at least one placeholder for a source or a target node and at least one placeholder for an attribute. The placeholder for the source or target node is replaced by the selected source or target node and the placeholder for the attribute is replaced by the corresponding determined attribute. For instance, a template may be given by "Describe the [attribute] of the [node]", wherein [attribute] represents, in this particular example, the placeholder for the attribute, and [node] represents the placeholder for the source or target node.

Preferably, the data base is a commonsense knowledge graph. Exemplarily, the data base may be given by ConceptNet, https://arxiv.org/abs/1612.03975, a knowledge graph that connects words and phrases of natural language with labeled edges. An advantage of using a commonsense knowledge graph, such as ConceptNet, as the data base is its rich collection of commonsense relationships between concepts, allowing for broader and more nuanced exploration of potential image attributes beyond simple object labels. This may lead to more comprehensive, more accurate and richer scene graphs.

While a commonsense knowledge graph like ConceptNet offers broad coverage, the data base may, alternatively, be a domain-specific knowledge graph. In situations where the target image or information pertains to a specialized field, such as medical imaging or manufacturing processes, a domain-specific knowledge graph can provide more relevant and precise contextual information. This specialized knowledge graph may contain terminology and relationships tailored to the specific domain, enabling more accurate and targeted information extraction compared to a general commonsense knowledge graph.

Preferably, the pre-trained image classifier is selected from the group consisting of a convolutional neural network (CNN), a vision transformer (ViT), a support vector machine (SVM), a k-nearest neighbor classifier (k-NN), a decision tree, a random forest, and a naive Bayes classifier. Preferably, each image of the plurality of images is a training image from the image classifier's training data set. Accordingly, in this case, patterns are derived, and hence explanations for the image classifier's decisions are generated based on the image classifier's training data.

Advantageously, using training images for analysis enables targeted pattern discovery, revealing the specific data/specific patterns in the training data responsible for shaping the classifier's behavior. Particularly, the analysis reveals which learned patterns lead to correct and which learned pattern lead to incorrect classifications. Furthermore, this approach may directly explain the classifier's performance on its training data set, providing insights into the model's learning process and potential overfitting or biases.

Preferably, the method further comprises the following steps of generating potential misclassification patterns - i.e. pattern of incorrect classifications - when the number of identified patterns correlated with incorrect classifications is below a threshold. The generating comprises selecting patterns correlated with correct classifications; for each node in the selected patterns, identifying an antonym of at least one attribute of the node using the data base, e.g. a commonsense knowledge graph, or, in other embodiments, a domain-specific knowledge graph; and generating the potential misclassification patterns by, for each selected pattern, determining new patterns where the at least one attribute is replaced with the identified antonym.

The foregoing steps are particularly useful when the image classifier is well-trained and exhibits few misclassifications, resulting in a limited number of image graphs from which to extract misclassification patterns. In these cases, an empty or small set of misclassification patterns (small compared to the set comprising the correct classifications) may be returned. In such scenarios, the patterns extracted from correctly classified images may be used to generate potential misclassification patterns. For instance, a commonsense knowledge graph can be used to extract the antonym of each node in the extracted patterns for the correctly classified images, and all possible pattern combinations are generated. For example, for the pattern [(truck, has, load) Λ (truck, is, heavy)], using a commonsense knowledge graph, antonyms for "heavy" (light) and "load" (empty/no load) can be identified. "Truck" itself has no direct antonym. This results in potential misclassification patterns [(truck, has, no load/is empty) Λ (truck, is, heavy)] V [(truck, has, load) Λ (truck, is, light)] V [(truck, has, no load/is empty) Λ (truck, is, light)].

Advantageously, the problem of an insufficient number of misclassifications may be addressed by generating *potential* misclassification patterns from patterns of correct classifications, using antonyms from a knowledge graph. This allows the method to identify potential weaknesses in the classifier even when insufficient misclassifications are available.

Preferably, the method further comprises generating a pattern-based classification prediction for a new image by comparing subgraphs of its scene graph to the extracted patterns (correlated with correct and incorrect classifications) using a similarity measure; generating a classification prediction based on these comparisons; and evaluating the pattern-based prediction by comparing it to a classification of the new image from the pre-trained image classifier. This comparison provides a performance metric indicating the correlation between the identified patterns and the pre-trained classifier's classifications.

Advantageously, the above steps provide a way to evaluate the quality and relevance of the extracted patterns. By comparing pattern-based predictions to the pre-trained classifier's predictions, the method can quantify how well the discovered patterns explain the classifier's behavior. This performance metric provides insights into the reliability and generalizability of the identified patterns.

Preferably, the method further comprises the following steps: in a further method step, at least one reason for a bias, i.e. at least one reason for systematic incorrect and/or correct classifications of the image classifier is identified based on the representative subgraphs of the first and the second group, respectively. Here, a bias is understood as a (systematic) deviation from/discrepancy with respect to a true or expected value. The reason(s) for a bias/(in)correct classification are identified by extracting the representative subgraphs for each one of the first and second group, respectively, wherein objects (represented by nodes) and their respective relations (represented by edges) in a representative subgraph determine the correct or incorrect classification decision of the image classifier. Subsequently, the classification accuracy is improved, according to a performance metric of the image classifier, by re-training the image classifier taking the at least one reason for (in)correct classification into account. There are several options for improving the classification accuracy in this context. One option would be re-training with the images that have been used for the bias detection (throughout the method), and their correct labels. Another option is a (supervised) re-training of the image classifier with (completely) new images with corresponding labels, wherein the new images explicitly show the pattern(s) responsible for the misclassifications. As a further option, a combination of both the aforementioned options may be considered.

Preferably, the image classifier may be part of an autonomous robot's environment perception system. The method may further comprise obtaining images via the robot's camera or video camera; determining a control signal for the robot based on the retrained classifier's output; and controlling the robot according to the control signal.

According to a further aspect, the invention relates to a data processing system comprising a processor configured to perform a method as described herein.

According to a further aspect, the invention relates to a computer program comprising machine-readable instructions, which, when the program is executed by a computer, cause the computer to carry out one of the computer-implemented methods described above and below. Furthermore, according to another aspect, the invention relates to a machine-readable storage medium, on which the above computer program is stored.

Embodiments of the invention will be discussed with reference to the following figures in more detail. The figures show:
Figure 1 a flow chart of an exemplary embodiment;
Figure 2 a flow chart of an exemplary embodiment;
Figure 3 a flow chart of an exemplary embodiment;
Figure 4 a flow chart of an exemplary embodiment.

### Description of the embodiments

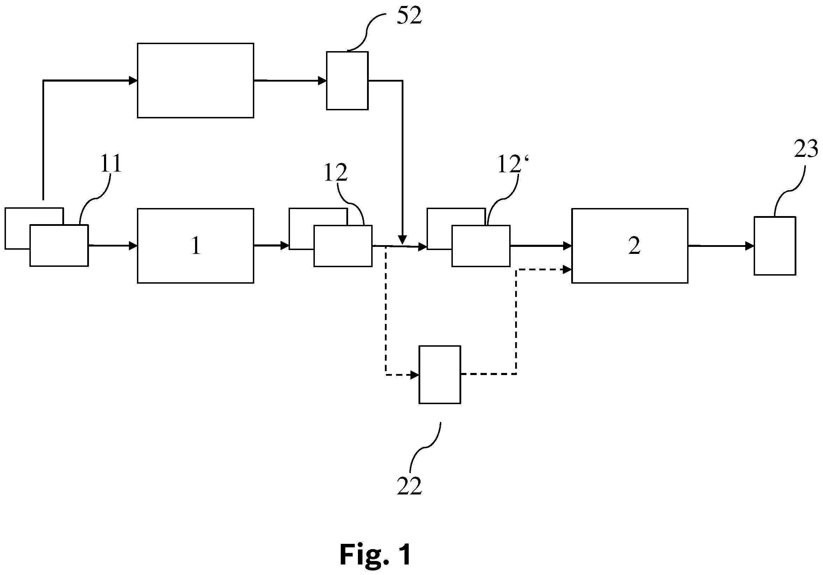

Figure 1 shows an exemplary embodiment of a method of identifying patterns in scene graphs 12 of images 11 that correlate with correct or incorrect image classifications 52 of pre-trained image classifier 5. A plurality of images 11 is provided to pre-trained image classifier 5 and to scene graph generator 1. Each image has a corresponding expected (ground truth) class label. Scene graph generator 1 determines a plurality of scene graphs 12, one scene graph for each image from the plurality of images 11. Pre-trained classifier 5 determines image classifications 52, i.e. a classification label for each of the images out of plurality 11. Subsequently, it is determined whether the predicted classification of each image is correct or incorrect by comparing the predicted classification with the corresponding expected classification, i.e. ground truth class label. Grouped scene graphs 12' are obtained by grouping scene graphs 12 into a first group and a second group based on whether the classification by the image classifier is correct or incorrect, respectively. Frequent pattern mining module 2 then extracts for each of the first group and the second group, a set of representative subgraphs 23 shared among the scene graphs within the respective group, wherein the representative subgraphs 23 represent the patterns correlated with the correct and incorrect classifications, respectively. Frequent pattern mining module 2 may be given by cgspan. Generally, frequent pattern mining module 2 may receive graphs 12' as input data and will provide frequent pattern 23 shared among the input graphs as an output. In addition, optionally, frequent pattern mining module may receive node-to-label mappings 22 as an input to extract shared subgraphs 23. Here, a node-to-label mapping is understood to assign identifiers to nodes in a graph, enabling equivalent treatment of nodes sharing the same identifier. This may enable to treat nodes with the same identifier as equivalent during subgraph extraction. In other words, nodes with similar semantic meaning may be treated as equivalent for identifying shared subgraphs among the scene graphs. To this end, optionally, similar nodes across scene graphs 12 are identified based on a similarity measure applied to their (semantic information encoding) node embeddings. Node-to-label mapping 22 may assign identifiers to nodes in the respective graphs, allowing nodes with the same label to be treated as equivalent by the frequent pattern mining module.

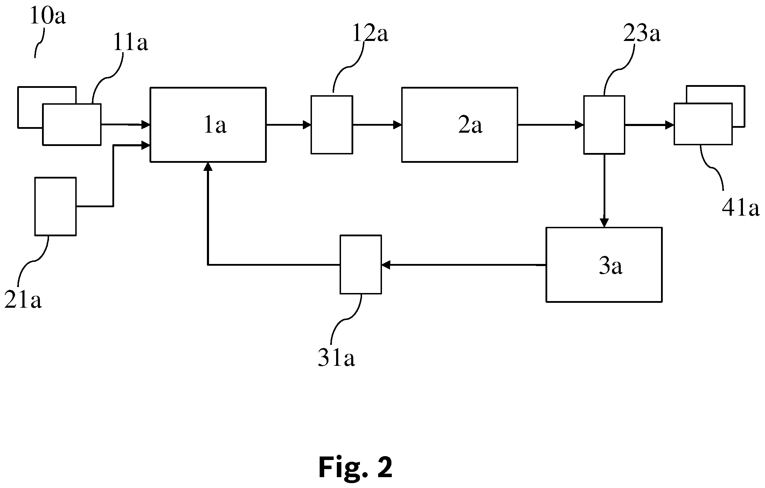

Figure 2 shows an exemplary embodiment of a method of generating a scene graph 31a from an input image 11a. To describe image 11a, a set of adaptable questions, 21a, 31a, about each image is posed. A multimodal foundation model, machine learning system 1a, - receiving images and text as input data and generating an output text based on the input image and text - is used to answer each of the adaptable questions. For instance, the opensource foundation model LLaVA v1.6 may be used as machine learning system 1a. The questions provided to machine learning system 1a are adapted based on the content of the image. At the beginning, the machine learning system receives image 11a and initial natural language question 21a. Question 21a asks the machine learning system 1a to provide as output detailed description 12a of image 11a. Information extraction module 2a then extracts from natural language description 12a an initial set 23a of triplets, each triplet comprising a source node, a relation and a target node. For instance, an OpenlE module/component, e.g., Stanza's OpenlE component, may be used as information extraction module 2a to parse the (response) description 12a into triplets, wherein each triplet in set 23a consists of a source, relation, and target, respectively. Next, at least one source or target node from set 23a of triplets is selected and commonsense knowledge graph (CSKG) 3a is employed to formulate additional questions 31 about the selected source and target nodes extracted from the machine learning system's 1a response 12a. For instance, ConceptNet may be chosen as commonsense knowledge graph 3a. The aim of a question 31a is to extract more specific information about the source and target nodes in set 23a. Questions 31a are generated by identifying a most similar (according to, e.g. cosine similarity between node embeddings) node in the CSKG 3a to a selected source/target node in set 23a and then considering the relations of the most similar node in CSKG 3a as the set of potential attributes for the respective selected source/target node. In this way, from commonsense knowledge graph 3a an attribute related to the selected source or target node is determined. Subsequently, natural language question 31a is formulated based on the determined attributes and the respective selected source or target node. To this end, a template may be used. The template may comprise at least one placeholder for the respective source/ target node and at least one placeholder for a corresponding determined attribute. The placeholder for the source or target node is then replaced by the selected source or target node and the placeholder for the attribute is replaced by the corresponding determined attribute. For instance, a template may be given by "Describe the [attribute] of the [node]", wherein [attribute] represents, in this particular example, the placeholder for the attribute, and [node] represents the placeholder for the source or target node. For instance, a node "vehicle" in the CSKG may have an attribute "type," leading to the question "Describe the type of the vehicle.". Generally, in the context of the disclosure, it is understood, that questions 21a, 31a, provided to machine learning system 1a, may also comprise instructions seeking for information. Accordingly, "Describe the [attribute] of the [node]" is considered as a viable question 21a, 31a, as well as the reformulated version "What is the [attribute] of the [node]". Machine learning system 1a then receives question 31a and, based on question 31a and image 11a, generates a further textual description 12i of image 11a. By information extraction module 2a, further triplets are then extracted from the new, further description 12i and combined with the existing triplets to form an updated set 23i for the next iteration. This process may, exemplarily, repeat for each source/target node extracted for N iterations. N is a tunable parameter that determines the level of detail required for the image descriptions and may be chosen or determined according to the desired richness and accuracy of the scene graph. For instance, N may be determined such that for each source and target node out of the (repetitively updated) set 23a, at least one attribute is determined. Eventually, scene graph 41a is built from the combined/repetitively updated sets 23a of triplets after N iterations.

Consequently, each triplet extracted from machine learning system's 1a answers - e.g. from LLaVA's answers - contributes an edge in scene graph 41a representing the image's 11a content. Accordingly, the triplet extraction abstracts the textual descriptions into graphs.

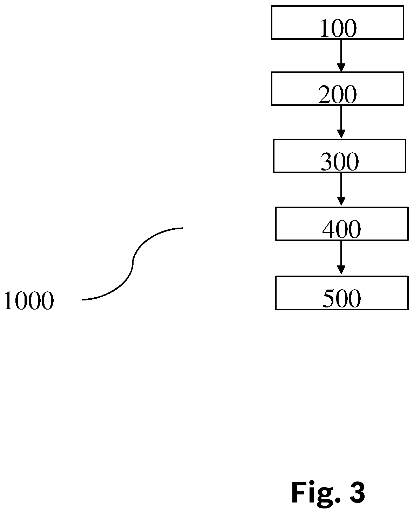

Figure 3 shows a flow chart of an exemplary method 1000 of identifying patterns in scene graphs of images that correlate with correct or incorrect image classifications of a pre-trained image classifier. In step 100, a scene graph for each of a plurality of images is obtained. The plurality of images is classified in step 200, using the pre-trained image classifier. In step 300, the predicted classification for each image is compared to its expected classification and determined to be either correct or incorrect. Subsequently, in step 400, the scene graphs are grouped into a first group and a second group based on whether the classification by the image classifier is correct or incorrect, respectively. For each of the first group and the second group, a set of representative subgraphs shared among the scene graphs within the respective group, is extracted in step 500, wherein the representative subgraphs represent the patterns correlated with the correct and incorrect classifications, respectively.

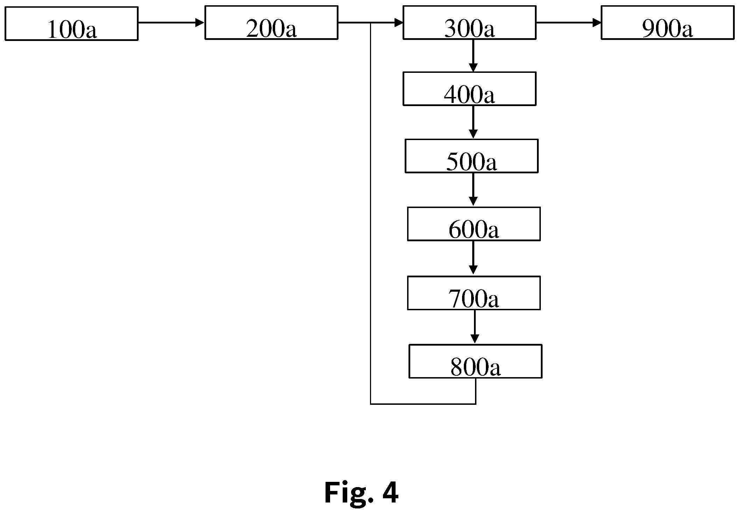

With reference to Figure 4, a flow chart of an exemplary embodiment of the method sub-steps for obtaining a scene graph for an image (received as an input), is shown. In method step 100a, an initial textual description of the image is generated from the image and an initial natural language question, using a machine learning system, such as, e.g. LLaVA, https://arxiv.org/pdf/2304.08485. In step 200a, an information extraction module extracts from the initial textual description an initial set of triplets, each triplet comprising a source node, a relation and a target node. This set of triplets is then iteratively expanded by N repetitions of the following steps (steps 300a to 800a): selecting, in step 300a a node from the current set of triplets; determining (step 400a) a related attribute from a database; generating (step 500a) a question based on the node and attribute; using the question to obtain (step 600a) a further textual description from the machine learning system; extracting (step 700a) further triplets from the new description; and combining (step 800a) the current and further triplets to form an updated set for the next iteration. Finally, in step 900a, the scene graph is constructed from the combined sets of triplets after N iterations.

## Claims

1. Computer-implemented method (1000) of identifying patterns (23) in scene graphs (12) of images (11) that correlate with correct or incorrect image classifications (52) of a pre-trained image classifier (5),
the method comprising:
- obtaining (100) a scene graph (12) for each of a plurality of images (11),
- classifying (200) the plurality of images (11) using the pre-trained image classifier (5),
- determining (300) whether the predicted classification (52) of each image is correct or incorrect by comparing the predicted classification with a corresponding expected classification,
- grouping (400) the scene graphs (12') into a first group and a second group based on whether the classification by the image classifier (5) is correct or incorrect, respectively; and
- extracting (500), for each of the first group and the second group, a set of representative subgraphs (23) shared among the scene graphs (12') within the respective group, wherein the representative subgraphs represent the patterns correlated with the correct and incorrect classifications, respectively.

2. Method (1000) according to claim 1, wherein a subgraph (12') is included into the respective set of representative subgraphs if its frequency of occurrence among the scene graphs within the respective group exceeds a predefined threshold.

3. Method (1000) according to any of the preceding claims, further comprising, prior to extracting the representative subgraphs,
- generating embeddings for the nodes of the scene graphs, wherein the embeddings comprise semantic information of the nodes,
- identifying similar nodes across the plurality of scene graphs based on a similarity measure applied to the embeddings,
- treating similar nodes as equivalent during the extraction of the representative subgraphs shared among the scene graphs.

4. Method (1000) according to any of the preceding claims, wherein representative subgraphs (23) are extracted with cgSpan.

5. Method (1000) according to any of the preceding claims, wherein obtaining the scene graph (12) for each of the plurality of images (11) comprises:
- generating (100a), by a machine learning system (1a), from the respective image and an initial natural language question, an initial textual description of the image;
- extracting (200a), by an information extraction module, from the initial textual description an initial set of triplets, each triplet comprising a source node, a relation and a target node;
for a number N of iterations, where N > 1:
- selecting (300a) at least one source or target node from a current set of triplets, wherein the initial set of triplets forms the current set of triplets for a first iteration;
- determining (400a) from a graph structured data base an attribute related/connected to the at least one selected source or target node;
- determining (500a) a question based on the selected source or target node and the corresponding determined attribute from the graph structured data base;
- determining (600a), by the machine learning system, from the image and the determined question, a further textual description of the image,
- extracting (700a), by the information extraction module, a further set of triplets from the further textual description;
- combining (800a) the current set of triplets and the further set of triplets to an updated set of triplets, the updated set forming the current set for a next iteration; and
- constructing (900a) the scene graph from the combined sets of triplets after N iterations.

6. Method (1000) according to any of the preceding claims, wherein the pre-trained image classifier (5) is selected from the group consisting of a convolutional neural network (CNN), a vision transformer (ViT), a support vector machine (SVM), a k-nearest neighbor classifier (k-NN), a decision tree, a random forest, and a naive Bayes classifier.

7. Method (1000) according to any of the preceding steps, further comprising generating potential misclassification patterns when the number of identified patterns correlated with incorrect classifications is below a threshold, the generating comprising:
- selecting patterns correlated with correct classifications,
- for each node in the selected patterns, identifying an antonym of at least one attribute of the node using a data base; and
- generating the potential misclassification patterns by, for each selected pattern, determining new patterns where the at least one attribute is replaced with the identified antonym.

8. Method (1000) according to any of the preceding claims, further comprising:
- generating a pattern-based classification prediction for a new image by comparing subgraphs of a scene graph of the new image to the extracted patterns correlated with the correct and incorrect classifications using a similarity measure,
- generating a classification prediction based on the comparisons, and
- evaluating the pattern-based classification prediction by comparing it to a classification of the new image by the pre-trained image classifier, wherein the comparison provides a performance metric indicative of the correlation between the identified patterns and the classifications of the pre-trained image classifier.

9. Method (1000) according to any of the preceding claims, the method further comprising:
- identifying at least one reason for systematic incorrect and/or correct classifications of the image classifier based on the representative subgraphs of the first and the second group, respectively; and
- improving, according to a performance metric of the image classifier, the classification accuracy by re-training the image classifier taking the at least one reason for (in)correct classification into account.

10. Method (1000) according to claim 9, wherein the image classifier is comprised by an at least partly autonomous robot for environment perception, the method further comprising:
- obtaining the plurality of images by a camera or a video-camera of the robot,
- determining a control signal for the robot based on the classification result of the re-trained image classifier; and
- controlling the autonomous robot according to the control signal.

11. Data processing system, comprising a processor configured to perform the method (1000) according to any of the claims 1 to 9.

12. Computer program comprising instructions which, when the program is executed by a computer, cause the computer to carry out the method (1000) according to any of the claims 1 to 9.

13. Computer-readable data carrier having stored thereon the computer program of claim 12.
